(19) Europäisches Patentamt
European Patent Office
Office européen des brevets

(11) EP 1 878 899 A1

(12) EUROPEAN PATENT APPLICATION

(43) Date of publication:
**16.01.2008 Bulletin 2008/03**

(51) Int Cl.:
***F02D 41/22*** *(2006.01)* *F02D 9/02* *(2006.01)*

(21) Application number: **07013221.2**

(22) Date of filing: **05.07.2007**

(84) Designated Contracting States:
**AT BE BG CH CY CZ DE DK EE ES FI FR GB GR HU IE IS IT LI LT LU LV MC MT NL PL PT RO SE SI SK TR**
Designated Extension States:
**AL BA HR MK YU**

(30) Priority: **11.07.2006 JP 2006190098**

(71) Applicant: **Yamaha Hatsudoki Kabushiki Kaisha**
**Iwata-shi, Shizuoka 438-8501 (JP)**

(72) Inventors:
- **Yamane, Hayato**
  **Iwata-shi**
  **Shizuoka-ken 438-8501 (JP)**
- **Samoto, Haruhiko**
  **Iwata-shi**
  **Shizuoka-ken 438-8501 (JP)**

(74) Representative: **Grünecker, Kinkeldey, Stockmair & Schwanhäusser**
**Anwaltssozietät**
**Maximilianstrasse 58**
**80538 München (DE)**

# (54) Sensor abnormality detection device

(57) An internal combustion engine controlling apparatus controls an internal combustion engine of an automotive vehicle, and includes a sensor arranged to detect a state quantity concerning an automotive vehicle, and a signal abnormality detection device arranged to detect an abnormality in a state quantity signal which is output from the sensor. The signal abnormality detection device includes a calculation section arranged to receive a state quantity signal which is output from the sensor, and to calculate a second derivative of a state quantity represented by the state quantity signal, and an abnormality determination section arranged to determine whether the state quantity signal is abnormal or not based on the second derivative calculated by the calculation section.

*FIG.1*

10
SIGNAL ABNORMALITY DETECTION DEVICE
11
12
1
STATE QUANTITY SIGNAL
SENSOR
CALCULATION SECTION
SECOND DERIVATIVE OF STATE QUANTITY
ABNORMALITY DETERMINATION SECTION
NORMAL OR ABNORMAL

EP 1 878 899 A1

## Description

BACKGROUND OF THE INVENTION

1. Field of the Invention

The present invention relates to an internal combustion engine controlling apparatus, and more particularly to an internal combustion engine controlling apparatus having a signal abnormality detection device which detects an abnormality of a signal which is output from the sensor. Moreover, the present invention also relates to an automotive vehicle incorporating such an internal combustion engine controlling apparatus.

2. Description of the Related Art

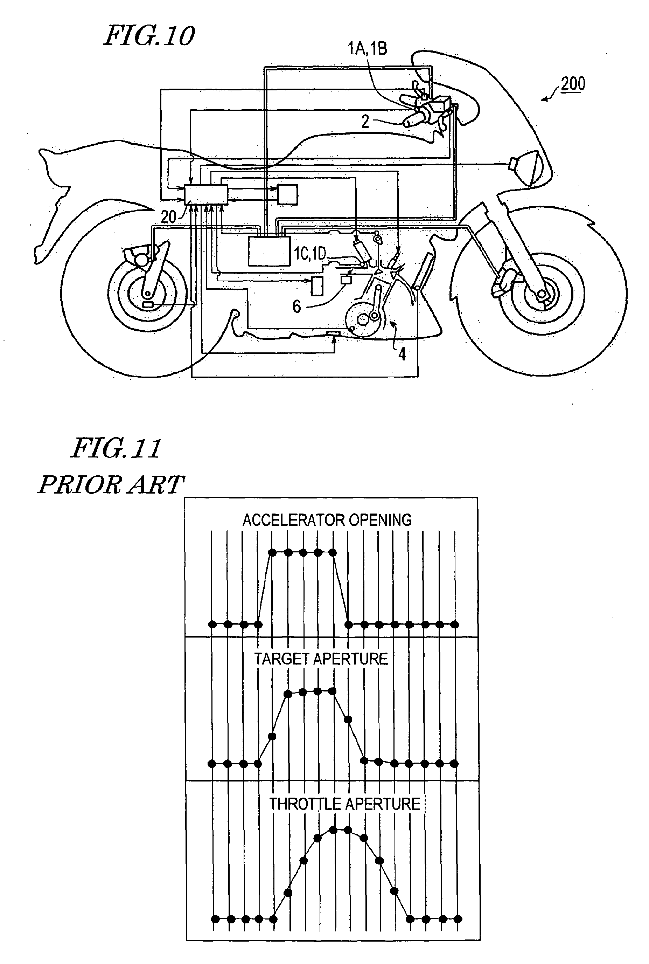

In recent years, electronically-controlled throttle systems are beginning to be adopted for automotive vehicles. In an electronically-controlled throttle system, as shown in FIG. 11, a throttle sensor detects an actual aperture of a throttle valve ("throttle aperture"). With respect to this throttle aperture, a target aperture for the throttle valve is determined in accordance with the degree of accelerator opening (which is detected by an accelerator sensor) and the state of the vehicle. Then, with an actuator such as a motor, control is performed to ensure that the throttle aperture coincides with the target aperture.

However, for various reasons, a sensor may indicate a different value from the actual value of the accelerator opening or throttle aperture (i.e., output an abnormal signal). Therefore, it is desirable that an electronically-controlled throttle system has the ability to cope with such abnormal signals as quickly as possible. Causes for signal abnormality may be breaking of a signal line which is connected to the sensor, radiowave noises, and so on.

As a technique for detecting the aforementioned signal abnormalities, Japanese Laid-Open Patent Publication No. 9-209809 proposes a technique of using an amount of change, per unit time, of a value which is detected by a sensor (i.e., a speed of change in the detection value), where the amount of change is relied on as a reference parameter.

In the technique disclosed in Japanese Laid-Open Patent Publication No. 9-209809, as shown in FIG. 12, a speed of change in the sensor detection value is compared to a predetermined abnormality threshold value, and if the absolute value of the speed of change is greater than the abnormality threshold value, the signal is determined as abnormal.

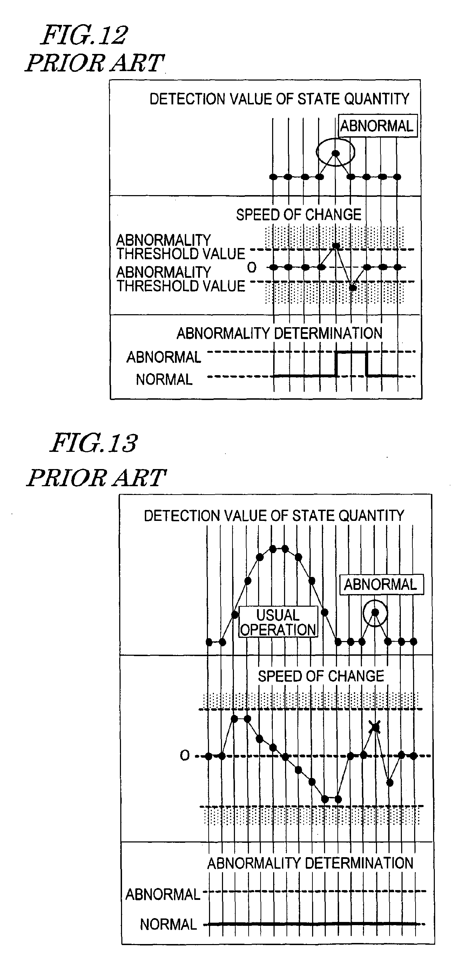

However, in this technique, the abnormality threshold value must be prescribed with a margin, i.e., so as to be somewhat larger than necessary, in order not to misjudge a great speed of change that may appear at the time of rapidly opening or closing the accelerator or throttle as being abnormal. As a result, as shown in FIG. 13, an abnormal signal having a small amplitude may not be detected at all, thus falling short of a sufficient detection ability.

As a technique for solving such a problem, Japanese Laid-Open Patent Publication No. 2002-276440 proposes a technique of variably setting an abnormality threshold value based on the cause of a change in a state quantity that is associated with a change in the target value.

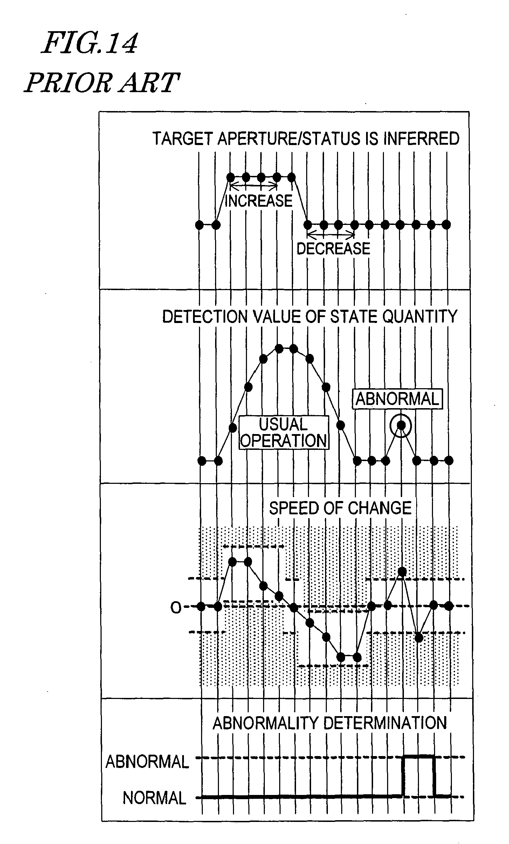

In this technique, when a change occurs in the target aperture of a throttle valve as known from the accelerator opening or the state of the vehicle, as shown in FIG. 14, the operation status of the throttle valve (i.e., whether the state quantity is on an increase or decrease or constant) is inferred, based on the elapsed time since the target aperture has undergone a change, motor performance, amount of deviation of the throttle aperture, etc. Based on this inferred operation status, the abnormality threshold value is variably set.

However, while the technique disclosed in Japanese Laid-Open Patent Publication No. 2002-276440 is applicable to a throttle signal which is output from the throttle sensor, this technique is not applicable to an accelerator signal which is output from the accelerator sensor. The reason is that, while a throttle signal has a target value, an accelerator signal does not have a target value. Thus, it is impossible to infer the operation status of the accelerator pedal, which makes it impossible to set the abnormality threshold value to an optimum value that is in accordance with the operation status of the accelerator pedal.

In an actual environment, abnormalities may occur in both an accelerator signal and a throttle signal. When an abnormality occurs in an accelerator signal, it will also affect the behavior of the throttle valve, which is controlled in accordance with a target value that is set based on the accelerator signal.

Moreover, for automotive vehicles (especially motorcycles), there is a trend in the recent years to use internal combustion engines with a higher response ability than ever. In an internal combustion engine with a good response ability, the speed of change in the revolutions and the speed of change in the throttle aperture tend to be large. In other words, a considerably large speed of change may be detected even in the absence of an abnormality. Therefore, with the techniques disclosed in Japanese Laid-Open Patent Publication Nos. 9-209809 and 2002-276440 of using the speed of change in the sensor detection value as a reference parameter (which was conventionally believed to be sufficient), it is becoming difficult to distinguish an abnormal signal from a normal signal. One reason why the techniques disclosed in Japanese Laid-Open Patent Publication Nos. 9-209809 and 2002-276440 have been considered to be sufficient is that electronically-controlled throttle systems have hitherto been used mainly for four-wheeled automobiles. A four-wheeled automobile less often undergoes steep changes in revolutions and throttle aperture than does a motorcycle. As a result of studying the applicability of an electronically-controlled throttle system to a motorcycle, the inventors have found the aforementioned problems.

## SUMMARY OF THE INVENTION

In order to overcome the problems described above, preferred embodiments of the present invention provide an internal combustion engine controlling apparatus having a signal abnormality detection device which is capable of detecting an abnormal signal with a small amplitude (which was conventionally difficult to detect) and which is applicable also to signals that do not have target values, e.g., an accelerator signal.

An internal combustion engine controlling apparatus according to a preferred embodiment of the present invention includes a sensor arranged to detect a state quantity concerning the automotive vehicle, a signal abnormality detection device arranged to detect an abnormality in a state quantity signal which is output from the sensor, wherein, the signal abnormality detection device includes a calculation section arranged to receive a state quantity signal which is output from the sensor, and calculate a second derivative of a state quantity represented by the state quantity signal, and an abnormality determination section arranged to determine whether the state quantity signal is abnormal or not based on the second derivative calculated by the calculation,section.

In a preferred embodiment, the abnormality determination section compares an upper limit value and a lower limit value of a predetermined reference range against the second derivative calculated by the calculation section, and performs a determination based on a result of the comparison.

In a preferred embodiment, the abnormality determination section determines that the state quantity signal is abnormal when the second derivative calculated by the calculation section goes above the upper limit value at least once in a time slot defined by a predetermined determination time and goes below the lower limit value at least once in the time slot.

In a preferred embodiment, the upper limit value and the lower limit value are preferably set such that, at usual times, the calculation section will not output both a second derivative greater than the upper limit value and a second derivative less than the lower limit value within any time slot defined by the determination time.

In a preferred embodiment, the upper limit value and the lower limit value are a positive value and a negative value, respectively.

In a preferred embodiment, the internal combustion engine controlling apparatus according to the present invention is an electronically-controlled throttle system.

In a preferred embodiment, the sensor is an accelerator sensor arranged to detect an accelerator opening.

In a preferred embodiment, the sensor is a throttle sensor arranged to detect a throttle aperture.

An automotive vehicle according to another preferred embodiment of the present invention includes an internal combustion engine controlling apparatus having the above construction.

An internal combustion engine controlling apparatus according to various preferred embodiments of the present invention includes a signal abnormality detection device, which includes a calculation section arranged to receive a state quantity signal which is output from a sensor and calculate a second derivative of a state quantity represented by the state quantity signal, and an abnormality determination section arranged to determine whether the state quantity signal is abnormal or not based on the second derivative calculated by the calculation section. Since the signal abnormality detection device for an internal combustion engine controlling apparatus according to a preferred embodiment of the present invention performs an abnormality determination by using second derivatives, the signal abnormality detection device is able to detect an abnormal signal with a small amplitude (which was conventionally difficult to detect), and is also able to detect signals that do not have target values, e.g., an accelerator signal. The signal abnormality detection device also facilitates abnormality determination when used for an internal combustion engine with a good response ability.

Other features, elements, processes, steps, characteristics and advantages of the present invention will become more apparent from the following detailed description of preferred embodiments of the present invention with reference to the attached drawings.

## BRIEF DESCRIPTION OF THE DRAWINGS

FIG. 1 is a block diagram schematically showing a signal abnormality detection device included in an internal combustion engine controlling apparatus according to a preferred embodiment of the present invention.

FIG. 2 is a graph showing an example of a state quantity signal which is abnormal.

FIG. 3 is a graph showing: a state quantity which is detected by a sensor; a first derivative of the state quantity; a second derivative of the state quantity; and a result of abnormality determination by an abnormality determination section.

FIG. 4 is a graph showing: a state quantity which is detected by a sensor; a first derivative of the state quantity; a second derivative of the state quantity; and a result of abnormality determination by an abnormality determination section.

FIG. 5 is a block diagram schematically showing an electronically-controlled throttle system (internal combustion engine controlling apparatus) having a signal abnormality detection device according to a preferred embodiment of the present invention.

FIG. 6 is a schematically showing an accelerator sensor and a throttle sensor included in an electronically-controlled throttle system.

FIG. 7 is a diagram showing a flow of control data in an ECU (electronic control unit) included in an electronically-controlled throttle system.

FIG. 8 is a flowchart showing an exemplary procedure of abnormality determination.

FIG. 9 is a flowchart showing another exemplary procedure of abnormality determination.

FIG. 10 is a diagram schematically showing a motorcycle incorporating an electronically-controlled throttle system.

FIG. 11 is a graph showing a relationship between target aperture and actual aperture (throttle aperture) of a throttle valve and accelerator opening in an electronically-controlled throttle system.

FIG. 12 is a graph for explaining a conventional technique for detecting signal abnormalities.

FIG. 13 is a graph for explaining a conventional technique for detecting signal abnormalities.

FIG. 14 is a graph for explaining a conventional technique for detecting signal abnormalities.

## DETAILED DESCRIPTION OF PREFERRED EMBODIMENTS

Hereinafter, preferred embodiments of the present invention will be described with reference to the accompanying drawings. Note that the present invention is not to be limited to the following preferred embodiments.

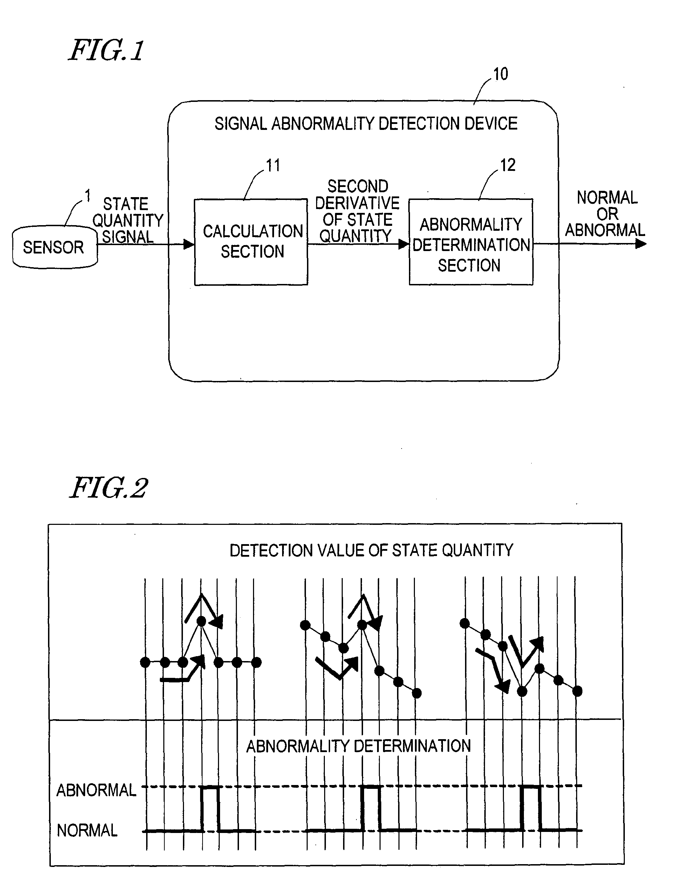

An internal combustion engine controlling apparatus according to the present preferred embodiment, which is an apparatus for controlling an internal combustion engine of an automotive vehicle, preferably includes at least a sensor and a signal abnormality detection device. FIG. 1 schematically shows a signal abnormality detection device 10 according to the present preferred embodiment. As shown in FIG. 1, the signal abnormality detection device 10 preferably includes a calculation section 11 and an abnormality determination section 12, and detects an abnormality of a signal which is output from the sensor 1.

The sensor 1 detects a physical parameter representing the status of an object of detection (i.e., a state quantity), and outputs a signal representing the state quantity (hereinafter referred to as a "state quantity signal"). The sensor 1 is simply an element that detects a state quantity concerning an automotive vehicle, and may be any of various detection elements, without being limited to an accelerator sensor or a throttle sensor as described below.

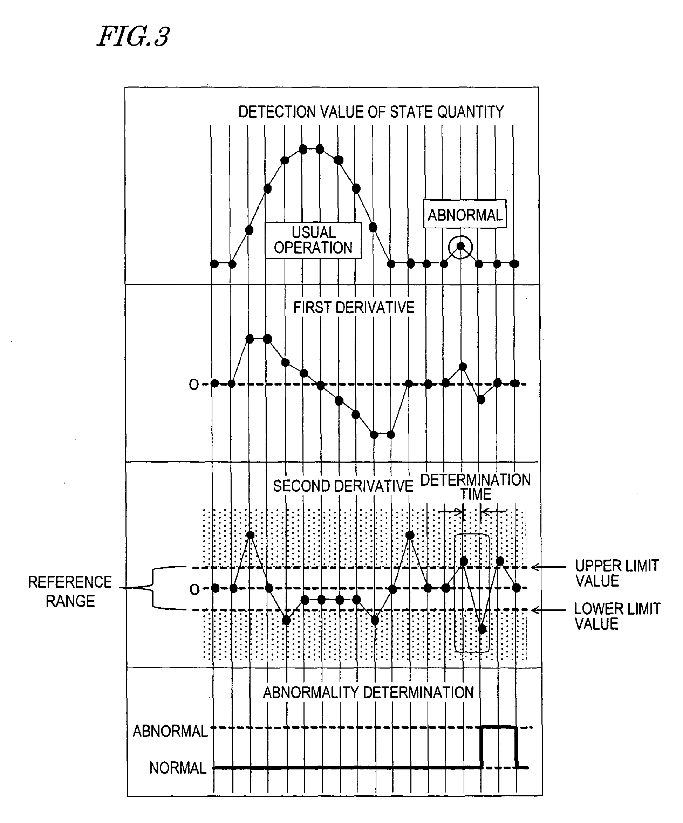

FIG. 2 shows an example of a state quantity signal which is abnormal. As shown in the upper half of FIG. 2, a signal that occurs in response to a breaking of a signal line of the sensor 1, a radiowave noise, etc., shows a steep rise and fall during a short period of time. Preferred embodiments of the present invention utilize the fact that an abnormal signal exhibits such a steep rise and fall during a short period of time, and that it is difficult to simulate a signal having such behavior with a human operation. Note that an abnormality in a signal having such behavior would not be detected by the technique disclosed in Japanese Laid-Open Patent Publication No. 9-209809 if the amplitude is small. On the other hand, as shown in the lower half of FIG. 2, the signal abnormality detection device 10 of the present preferred embodiment is able to detect an abnormality based on the construction described below, however small the amplitude may be.

As has already been described, the signal abnormality detection device 10 includes the calculation section 11 and the abnormality determination section 12.

The calculation section 11 receives the state quantity signal which is output from the sensor 1, and calculates a second derivative of the state quantity which is represented by the state quantity signal. In other words, based on a value that is obtained by differentiating the state quantity (i.e., a "speed of change" of the state quantity), the calculation section 11 calculates a value which is obtained through further differentiation (which might be termed an "acceleration of change").

Based on the second derivative which has been calculated by the calculation section 11, the abnormality determination section 12 determines whether the state quantity signal is abnormal or not, and outputs a signal indicating the result of determination. FIG. 3 shows: a state quantity which is detected by the sensor 1; a first derivative of the state quantity; a second derivative of the state quantity; and a result of abnormality determination (i.e., the signal which is output from the abnormality determination section 12).

In the example shown in FIG. 3, the state quantity undergoes a large increase and decrease in response to a usual operation, and thereafter undergoes a small increase and decrease due to an abnormality. According to the increase and decrease of the state quantity, the first derivative of the state quantity undergoes an increase and decrease, and may take both a positive value (during an increase of the state quantity) and a negative value (during a decrease of the state quantity). However, in the example shown in FIG. 3, the first derivative may take greater absolute values during the usual operation than in response to the abnormality. In such a case, the technique of Japanese Laid-Open Patent Publication No. 9-209809, which performs abnormality determination based on the first derivative, cannot detect the abnormal signal with a small amplitude, because it requires the use of a somewhat excessive (i.e., large) abnormality threshold value in order not to wrongly determine the signal during the usual operation as being abnormal.

The abnormality determination section 12 according to the present preferred embodiment makes a comparison between an upper limit value and a lower limit value of a range which is prescribed for the second derivative (hereinafter referred to as the "reference range"); and the second derivative which has been calculated by the calculation section 11. Based on the result of this comparison, the abnormality determination section 12 performs determination. FIG. 3 shows a reference range for the second derivative. As shown in FIG. 3, the upper limit value and the lower limit value of the reference range are a certain positive value and a certain negative value, respectively, such that the reference range spans both positive and negative values.

The upper limit value and the lower limit value of the reference range are preferably set such that, at usual times (i.e., in the absence of an abnormality), the second derivative calculation will not produce both a second derivative greater than the upper limit value and a second derivative less than the lower limit value within any time slot defined by a "determination time". As used herein, the "determination time" is a predetermined length of time for making the determination. In the example shown in FIG. 3, the determination time within two instances of sampling.

As can also be seen from FIG. 3, the second derivative goes beyond the reference range both at the time of the usual operation and the abnormality. However, during the usual operation, the second derivative never goes beyond both of the upper and lower limit values within the determination time. On the other hand, at the time of the abnormality, the second derivative goes beyond both of the upper and lower limit values within the determination time.

The abnormality determination section 12 determines that the state quantity signal is abnormal if the second derivative goes above the upper limit value at least once in a time slot defined by the determination time and goes below the lower limit value at least once in this time slot. As a result, the signal abnormality detection device 10 is able to detect an abnormal signal which shows a behavior as shown in FIG. 3.

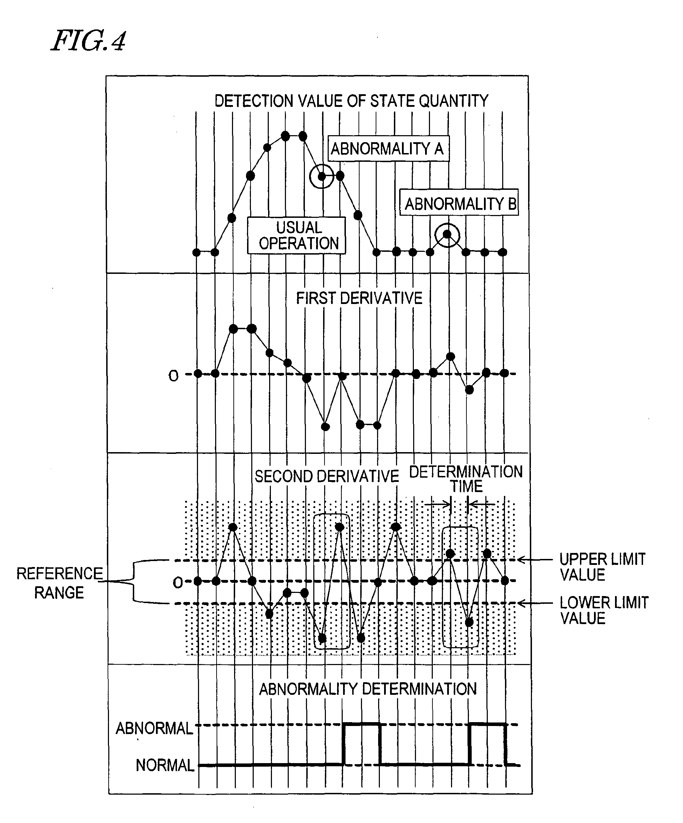

Note that, although FIG. 3 shows an abnormal signal occurring in a period during which the state quantity remains otherwise constant, the signal abnormality detection device 10 is also able to detect an abnormal signal occurring in a period during which the state quantity is on an increase or a period during which the state quantity is on a decrease. FIG. 4 shows an abnormal signal occurring in a period during which the state quantity is on a decrease (shown as abnormality A in the figure).

As shown in FIG. 4, a second derivative of an abnormal signal occurring in a period during which the state quantity is on a decrease goes beyond both of the upper and lower limit values of the reference range within the determination time, as is the case with a second derivative of an abnormal signal occurring in a period during which the state quantity remains otherwise constant (shown as abnormality B in the figure). Therefore, the abnormality determination section 12 of the signal abnormality detection device 10 is also able to detect an abnormal signal occurring in a period during which the state quantity is decreasing. The same principle also applies to an abnormal signal occurring in a period during which the state quantity is increasing, although not particularly shown in the figure.

As described above, the signal abnormality detection device 10 of the present preferred embodiment utilizes a second derivative of a state quantity for determining an abnormality of a state quantity signal. In a period during which the state quantity is supposed to be constant, or a period during which a speed of change of the state quantity (i.e., the first derivative) is supposed to be constant, the second derivative primarily takes a zero value, and will take a large positive or negative value only in a period during which the state quantity exhibits a steep rise and fall. By utilizing as a reference parameter the frequency with which the second derivative goes beyond the reference range within the determination time, an abnormal signal (which would exhibit a steep rise and fall within a relatively short span) can be distinguished from a signal during a usual operation (which would exhibit a rise and fall over a relatively long span). As a result, unlike in the technique disclosed in Japanese Laid-Open Patent Publication No. 9-209809, the signal abnormality detection device 10 is able to suitably detect an abnormal signal having a small amplitude.

Moreover, unlike in the technique disclosed in Japanese Laid-Open Patent Publication No. 2002-276440, the signal abnormality detection device 10 does not need to infer the specific manner change of the state quantity (i.e., either increasing, decreasing, or constant) based on a target value of the state quantity or the like. Therefore, the signal abnormality detection device 10 can also be used for any signal that does not have a target value (e.g., an accelerator signal which is output from an accelerator sensor in an automotive vehicle).

Moreover, since the signal abnormality detection device 10 utilizes a second derivative of a state quantity as a reference parameter, it is able to easily determine a signal abnormality in internal combustion engines (especially those with a good response ability) in which a quite large value might be detected as a speed of change (first derivative) of the state quantity even during a normal state.

As described above, the signal abnormality detection device 10 is able to detect an abnormal signal having a small amplitude (which was conventionally difficult to detect), and yet is applicable to a signal which does not have a target value, e.g., an accelerator signal. Therefore, the signal abnormality detection device 10 is suitably mounted in an internal combustion engine controlling apparatus of an automotive vehicle, and is suitably mounted in an electronically-controlled throttle system, for example.

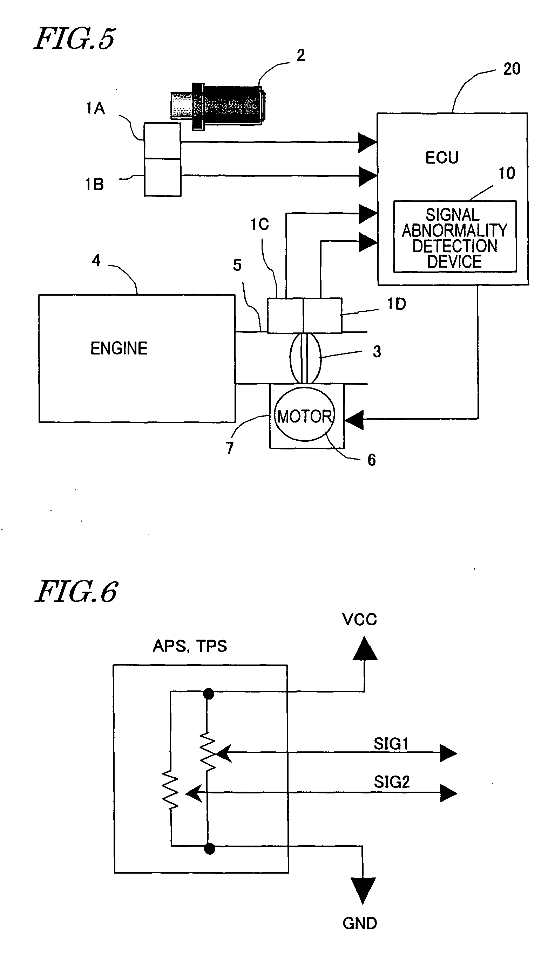

FIG. 5 shows an electronically-controlled throttle system having the signal abnormality detection device 10. This electronically-controlled throttle system is an internal combustion engine controlling apparatus which preferably includes a plurality of sensors 1A, 1B, 1C, and 1D arranged to detect a state quantity concerning an automotive vehicle; and an ECU (electronic control unit) 20 including the signal abnormality detection device 10.

The plurality of sensors 1A, 1B, 1C, and 1D include two accelerator sensors (APS) 1A and 1B arranged to detect the opening (i.e., the position) of an accelerator grip 2 and two throttle sensors (TPS) 1C and 1D for detecting the aperture (i.e., the position) of a throttle valve 3. The throttle valve 3, which is provided in an intake manifold 5 of an engine 4, is driven to open or close by a throttle actuator 7, which includes a motor 6.

In the construction shown in FIG. 5, in order to detect the accelerator opening and throttle aperture, respectively, the two accelerator sensors 1A and 1B and the two throttle sensors 1C and 1D are provided. By adopting such a construction, as shown in FIG. 6, each of the accelerator opening and the throttle aperture is detected in duplicate. If both of the two accelerator sensors 1A and 1B are normal, the same constant detection value will be output concerning the accelerator opening; and if both of the two throttle sensors 1C and 1D are normal, the same constant detection value will be output concerning the throttle aperture. Stated otherwise, if one of the accelerator sensors 1A and 1B or one of the throttle sensors 1C and 1D is not normal (i.e., out of order), different detection values will be detected, and thus one of the sensors being out of order can be known as a difference in detection values.

The ECU (electronic control unit) 20 preferably includes a microcomputer having a CPU and various memories. Thus, the signal abnormality detection device 10 (and its calculation section 11 and abnormality determination section 12) preferably includes at least some of the aforementioned constituent elements of the ECU 20. To the ECU 20, signals (accelerator signals) representing the accelerator opening as detected by the accelerator sensors 1A and 1B and signals (throttle signals) representing the throttle aperture as detected by the throttle sensors 1C and 1D are input. Furthermore, an engine revolution rate (rotation speed) signal and the like are also consecutively input to the ECU 20.

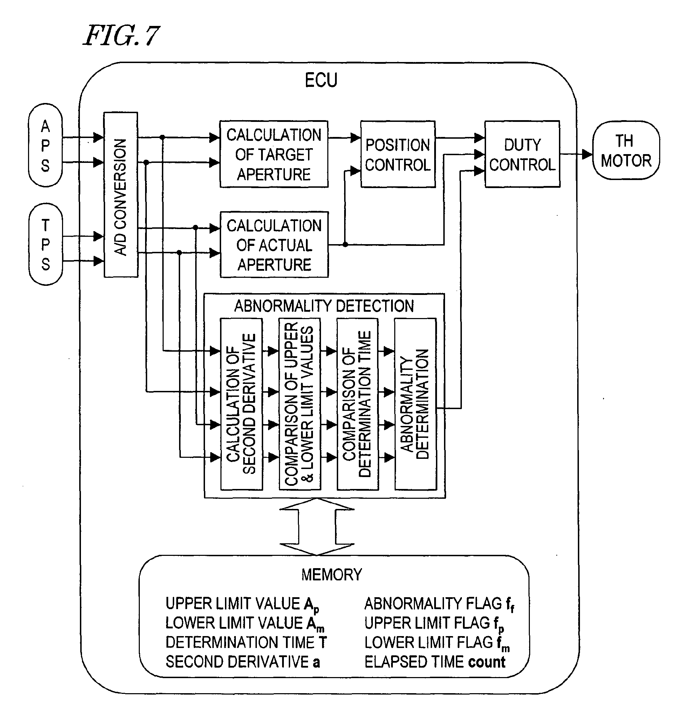

FIG. 7 shows a flow of control data in the ECU 20. The ECU 20 calculates a target aperture for the throttle valve 3 based on various input signals, and by using a PID control technique, for example, applies feedback control to the driving of the motor 6 in accordance with a deviation between the target aperture and the actual aperture (sensor detection value) of the throttle valve 3.

Specifically, the accelerator signal and throttle signal which are output from the accelerator sensors (APS) 1A and 1B and the throttle sensors (TPS) 1C and 1D are subjected to analog/digital conversion (A/D conversion), and thereafter used for calculating the target aperture and the actual aperture. Then, based on the deviation between the calculated target aperture and the actual aperture (i.e., so as to eliminate the difference), an amount of position adjustment for the throttle valve 3 is calculated, and the motor 6 is duty-controlled based on the calculated amount of position adjustment.

Moreover, the ECU 20 detects signal abnormalities based on second derivatives of the state quantities which have been detected by the accelerator sensors 1A and 1B and the throttle sensors 1C and 1D.

First, second derivatives of an accelerator opening and a throttle aperture (both being "state quantities") are calculated from the accelerator signal and throttle signal which have been subjected to A/D conversion. Next, comparisons between the calculated second derivative and the upper and lower limit values of the reference range are made, and then a comparison between the elapsed time and determination time is made, whereby abnormality determination is performed.

The above-described abnormality detection is performed by referring to, as appropriate, an upper limit value $A_p$, a lower limit value $A_m$, a determination time T, a second derivative a, an abnormality flag $f_f$, an upper limit flag $f_p$, a lower limit flag $f_m$, and a count of the elapsed time, which are stored in memory. If the signal is determined as abnormal, the motor 6 is duty-controlled so as to ignore the abnormal signal, i.e., so that the throttle valve 3 will not show any behavior which reflects the abnormal signal.

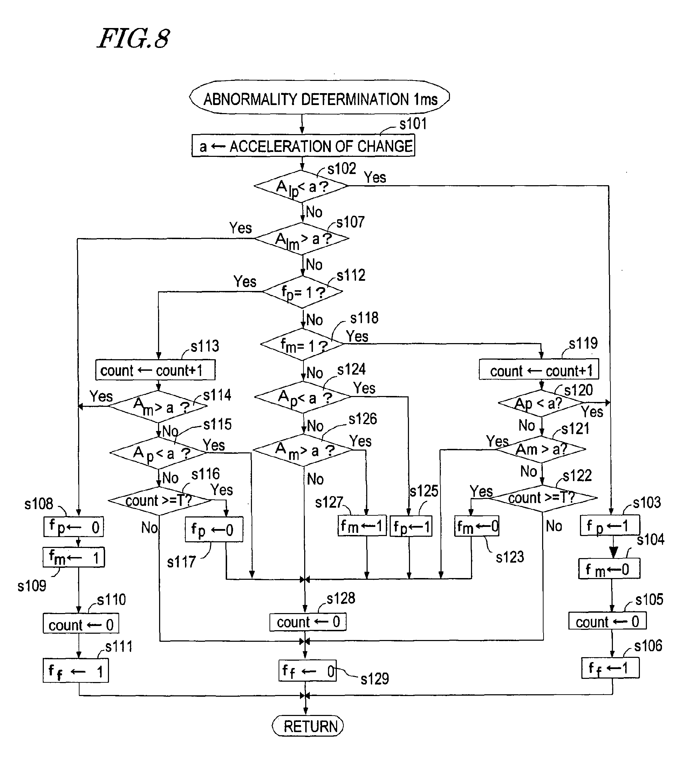

FIG. 8 is a flowchart showing an exemplary procedure of abnormality determination. The abnormality determination is executed at every interval of 1 ms in the ECU 20, for example. A state quantity $x_t$ at time t, a first derivative (speed of change) $v_t$ of the state quantity, and a second derivative (acceleration of change) $a_t$ of the state quantity can be expressed by eq. 1 and eq. 2 as follows.

$$v_t = x_t - x_{t-1} \quad \text{... eq. 1}$$

$$a_t = v_t - v_{t-1} \quad \text{... eq. 2}$$

Note that, in the example shown in FIG. 8, regarding the second derivative, not only the upper limit value $A_p$ and lower limit value $A_m$ of the reference range, but also an abnormality threshold value $A_{1p}$ which is greater than the upper limit value Ap and an abnormality threshold value $A_{1m}$ which is smaller than the lower limit value $A_m$ are defined. If the second derivative goes beyond the abnormality threshold value $A_{1p}$ or $A_{1m}$, the state quantity signal is immediately determined as abnormal.

The respective steps of the flowchart shown in FIG. 8 will be described below.

step s101: A second derivative of the current value of the state quantity is set to the variable *a*.

steps s102 to s111: If the second derivative *a* is greater than the abnormality threshold value $A_{1p}$ on the positive side, or smaller than the abnormality threshold value $A_{1m}$ on the negative side, the state quantity signal is determined as abnormal, and "1" is set to the abnormality flag $f_f$.

steps s124 to s127: If the second derivative *a* is above the upper limit value $A_p$ of the reference range, the second derivative detection flag (upper limit flag) $f_p$ on the positive side is set to 1; or if the second derivative *a* is below the lower limit value $A_m$ of the reference range, the second derivative detection flag (lower limit flag) $f_m$ on the negative side is set to 1.

steps s112 to s117: With "1" being set to the upper limit flag $f_p$, if the second derivative a goes below the lower limit value $A_m$ of the reference range within the determination time T, the state quantity signal is determined as abnormal, and "1" is set to the abnormality flag $f_f$. On the other hand, if the second derivative *a* does not go below the lower limit value $A_m$ of the reference range before the lapse of the determination time T, the state quantity signal is determined as not abnormal, and "0" is set to the upper limit flag $f_p$.

steps s118 to s123: With "1" being set to the lower limit flag $f_m$, if the second derivative *a* goes above the upper limit value $A_p$ of the reference range within the determination time T, the state quantity signal is determined as abnormal, and "1" is set to the abnormality flag $f_f$. On the other hand, if the second derivative a does not go above the upper limit value $A_p$ of the reference range before the lapse of the determination time T, the state quantity signal is determined as not abnormal, and "0" is set to the lower limit flag $f_m$.

By executing the above steps as shown in FIG. 8, it is possible to detect an abnormal signal having a small amplitude, which was conventionally difficult to detect. Note that, by prescribing the abnormality threshold values $A_{1p}$ and $A_{1m}$ in addition to the upper limit value $A_p$ and lower limit value $A_m$ of the reference range, as exemplified in FIG. 8, it becomes possible to make an immediate determination of an abnormality in response to a bizarre second derivative value that is incongruous to a usual operation, without waiting to consider the determination time T.

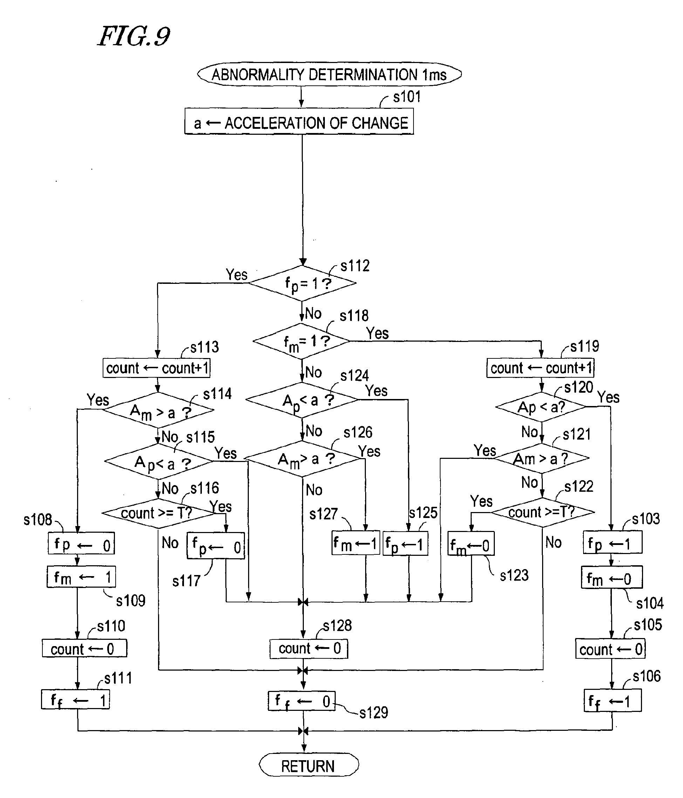

Of course, such abnormality threshold values $A_{1p}$ and $A_{1m}$ do not need to be defined, as exemplified in the procedure shown in FIG. 9. In the flowchart shown in FIG. 9, step s102 (comparing the second derivative a against the abnormality threshold value $A_{1p}$ on the positive side) and step s107 (comparing the second derivative a against the abnormality threshold value $A_{1m}$ on the negative side) shown in the flowchart of FIG. 8 are omitted. The procedure of FIG. 9 can also suitably perform abnormality detection.

An electronically-controlled throttle system having the signal abnormality detection device 10 according to the present preferred embodiment can be suitably used in various automotive vehicles. In particular, a motorcycle is likely to be equipped with an internal combustion engine having a good response ability, and is also likely to be subjected to drastic operations, and therefore will receive a particularly large benefit from incorporating the signal abnormality detection device 10 according to the present preferred embodiment.

FIG. 10 shows a motorcycle 200 incorporating the electronically-controlled throttle system shown in FIG. 5. The motorcycle 200 preferably includes accelerator sensors 1A and 1B for detecting the opening of an accelerator grip 2, throttle sensors 1C and 1D for detecting the aperture of a throttle valve 3, and an ECU 20 which includes the signal abnormality detection device 10 shown in FIG. 1. Based on the accelerator signal which is output from the accelerator sensors 1A and 1B and the throttle signal which is output from the throttle sensors 1C and 1D, the motor 6 is driven to control the aperture of the throttle valve 3.

In the motorcycle 200, since the ECU 20 includes the signal abnormality detection device 10 (not shown in FIG. 10), the aperture of the throttle valve 3 will not be controlled based on an abnormal accelerator signal or an abnormal throttle signal.

Although the present preferred embodiment illustrates an example where the signal abnormality detection device is incorporated in an electronically-controlled throttle system for an automotive vehicle, the present invention is not limited thereto. The present invention is broadly applicable to various internal combustion engine controlling apparatuses having a signal abnormality detection device for detecting abnormalities in a state quantity signal which is output from a sensor. For example, the present invention can also be used in an internal combustion engine controlling apparatus having a signal abnormality detection device for detecting abnormalities in a signal which is output from an intake pressure sensor, or an internal combustion engine controlling apparatus having a signal abnormality detection device for detecting abnormalities in a signal which is output from an oxygen sensor.

Moreover, the signal abnormality detection device according to various preferred embodiments of the present invention and an internal combustion engine controlling apparatus or automotive vehicle incorporating the same can perform the aforementioned processing based on a computer program. Such a computer program may be described based on the flowchart shown in FIG. 8 or FIG. 9, and executed by a CPU, for example. Such a computer program can be recorded on any storage medium such as an optical storage medium (e.g., an optical disk), a semiconductor storage medium (e.g., an SD memory card or an EEPROM), or a magnetic storage medium (e.g., a flexible disk). As a product, such a computer program may be distributed on the market in the form of a storage medium in which the computer program is recorded, or via telecommunication lines such as the Internet.

According to preferred embodiments of the present invention, there is provided an internal combustion engine controlling apparatus having a signal abnormality detection device which is capable of detecting an abnormal signal with a small amplitude (which was conventionally difficult to detect) and which is applicable also to signals that do not have target values, e.g., an accelerator signal.

An internal combustion engine controlling apparatus according to preferred embodiments of the present invention includes a signal abnormality detection device having excellent detection accuracy, and therefore is suitably used in an internal combustion engine for various automotive vehicles, e.g., a car, a bus, a truck, a motorbike, a tractor, an airplane, a motorboat, a vehicle for civil engineering use, or the like, and is particularly suitably used as an electronically-controlled throttle system for a motorcycle.

While the present invention has been described with respect to preferred embodiments thereof, it will be apparent to those skilled in the art that the disclosed invention may be modified in numerous ways and may assume many embodiments other than those specifically described above. Accordingly, it is intended by the appended claims to cover all modifications of the invention that fall within the true spirit and scope of the invention.

## Claims

**1.** An internal combustion engine controlling apparatus for controlling an internal combustion engine of an automotive vehicle, comprising:

a sensor arranged to detect a state quantity concerning the automotive vehicle; and
a signal abnormality detection device arranged to detect an abnormality in a state quantity signal which is output from the sensor; wherein
the signal abnormality detection device includes:

a calculation section arranged to receive a state quantity signal which is output from the sensor, and calculate a second derivative of a state quantity represented by the state quantity signal; and
an abnormality determination section arranged to determine whether the state quantity signal is abnormal or not based on the second derivative calculated by the calculation section.

**2.** The internal combustion engine controlling apparatus of claim 1, wherein the abnormality determination section compares an upper limit value and a lower limit value of a predetermined reference range to the second derivative calculated by the calculation section, and performs a determination based on a result of the comparison.

**3.** The internal combustion engine controlling apparatus of claim 2, wherein the abnormality determination section determines that the state quantity signal is abnormal when the second derivative calculated by the calculation section goes above the upper limit value at least once in a time slot defined by a predetermined determination time and goes below the lower limit value at least once in the time slot.

**4.** The internal combustion engine controlling apparatus of claim 3, wherein the upper limit value and the lower limit value are set such that, at usual times, the calculation section will not output both a second derivative greater than the upper limit value and a second derivative less than the lower limit value within any time slot defined by the determination time.

**5.** The internal combustion engine controlling apparatus of any of claims 2 to 4, wherein the upper limit value and the lower limit value are a positive value and a negative value, respectively.

**6.** The internal combustion engine controlling apparatus of any of claims 1 to 5, wherein the internal combustion engine controlling apparatus is an electronically-controlled throttle system.

**7.** The internal combustion engine controlling apparatus of claim 6, wherein the sensor is an accelerator sensor arranged to detect an accelerator opening.

**8.** The internal combustion engine controlling apparatus of claim 6, wherein the sensor is a throttle sensor arranged to detect a throttle aperture.

**9.** An automotive vehicle comprising the internal combustion engine controlling apparatus of any of claims 1 to 8.

*FIG.1*

10
SIGNAL ABNORMALITY DETECTION DEVICE
11
12
1
STATE QUANTITY SIGNAL
SENSOR
CALCULATION SECTION
SECOND DERIVATIVE OF STATE QUANTITY
ABNORMALITY DETERMINATION SECTION
NORMAL OR ABNORMAL

*FIG.2*

DETECTION VALUE OF STATE QUANTITY
ABNORMALITY DETERMINATION
ABNORMAL
NORMAL

*FIG.3*

DETECTION VALUE OF STATE QUANTITY
USUAL OPERATION
ABNORMAL
FIRST DERIVATIVE
O
SECOND DERIVATIVE
DETERMINATION TIME
REFERENCE RANGE
O
UPPER LIMIT VALUE
LOWER LIMIT VALUE
ABNORMALITY DETERMINATION
ABNORMAL
NORMAL

*FIG.4*

DETECTION VALUE OF STATE QUANTITY
ABNORMALITY A
ABNORMALITY B
USUAL OPERATION
FIRST DERIVATIVE
0
SECOND DERIVATIVE
DETERMINATION TIME
REFERENCE RANGE
0
UPPER LIMIT VALUE
LOWER LIMIT VALUE
ABNORMALITY DETERMINATION
ABNORMAL
NORMAL

*FIG.5*

2
20
1A
ECU
10
1B
SIGNAL ABNORMALITY DETECTION DEVICE
1C
4
5
1D
ENGINE
3
MOTOR
7
6

*FIG.6*

VCC
APS, TPS
SIG1
SIG2
GND

*FIG. 7*

ECU
A P S
T P S
A/D CONVERSION
CALCULATION OF TARGET APERTURE
POSITION CONTROL
DUTY CONTROL
TH MOTOR
CALCULATION OF ACTUAL APERTURE
ABNORMALITY DETECTION
CALCULATION OF SECOND DERIVATIVE
COMPARISON OF UPPER & LOWER LIMIT VALUES
COMPARISON OF DETERMINATION TIME
ABNORMALITY DETERMINATION
MEMORY
UPPER LIMIT VALUE $A_p$
LOWER LIMIT VALUE $A_m$
DETERMINATION TIME T
SECOND DERIVATIVE a
ABNORMALITY FLAG $f_f$
UPPER LIMIT FLAG $f_p$
LOWER LIMIT FLAG $f_m$
ELAPSED TIME count

*FIG.8*

ABNORMALITY DETERMINATION 1ms
s101
a ← ACCELERATION OF CHANGE
s102
A_lp < a ?
Yes
No
s107
A_lm > a ?
Yes
No
s112
f_p = 1 ?
Yes
No
s118
f_m = 1 ?
Yes
s113
count ← count+1
s114
A_m > a ?
Yes
No
s115
A_p < a ?
Yes
No
s116
count >=T?
Yes
No
s117
f_p ←0
s124
A_p < a ?
Yes
No
s126
A_m > a ?
Yes
No
s127
f_m ←1
s125
f_p ←1
s119
count ← count+1
s120
Ap < a?
Yes
No
s121
Am > a?
Yes
No
s122
count >=T?
Yes
No
s123
f_m ←0
s108
f_p ← 0
s109
f_m ← 1
s110
count ← 0
s111
f_f ← 1
s128
count ← 0
s129
f_f ← 0
s103
f_p ←1
s104
f_m ←0
s105
count ← 0
s106
f_f ←1
RETURN

FIG.9

ABNORMALITY DETERMINATION 1ms
s101
a ← ACCELERATION OF CHANGE
s112
$f_p = 1$?
Yes
No
s118
$f_m = 1$?
Yes
No
s113
count ← count+1
s114
$A_m > a$ ?
Yes
No
s115
$A_p < a$ ?
Yes
No
s116
count >= T?
Yes
No
s108
fp ← 0
fm ← 1
s109
s110
count ← 0
s111
$f_f$ ← 1
$f_p$ ← 0
s117
s124
$A_p < a$ ?
Yes
No
s126
$A_m > a$ ?
Yes
No
s127
$f_m$ ←1
s125
$f_p$ ←1
s128
count ← 0
$f_f$ ← 0
s129
s119
count ← count+1
s120
Ap < a?
Yes
No
s121
Am > a ?
Yes
No
s122
count >=T?
Yes
No
$f_m$←0
s123
s103
fp ←1
fm ←0
s104
s105
count ← 0
s106
$f_f$ ←1
RETURN

*FIG. 10*

1A,1B
200
2
20
1C,1D
6
4

*FIG. 11*
*PRIOR ART*

ACCELERATOR OPENING
TARGET APERTURE
THROTTLE APERTURE

*FIG. 12*
*PRIOR ART*

DETECTION VALUE OF STATE QUANTITY
ABNORMAL
SPEED OF CHANGE
ABNORMALITY THRESHOLD VALUE
O
ABNORMALITY THRESHOLD VALUE
ABNORMALITY DETERMINATION
ABNORMAL
NORMAL

*FIG. 13*
*PRIOR ART*

DETECTION VALUE OF STATE QUANTITY
ABNORMAL
USUAL OPERATION
SPEED OF CHANGE
O
ABNORMALITY DETERMINATION
ABNORMAL
NORMAL

*FIG.14*
*PRIOR ART*

TARGET APERTURE/STATUS IS INFERRED
INCREASE
DECREASE
DETECTION VALUE OF STATE QUANTITY
ABNORMAL
USUAL OPERATION
SPEED OF CHANGE
O
ABNORMALITY DETERMINATION
ABNORMAL
NORMAL

European Patent Office

# EUROPEAN SEARCH REPORT

Application Number
EP 07 01 3221

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | JP 2006 057588 A (MAZDA MOTOR) 2 March 2006 (2006-03-02)<br>* abstract *<br>* figures 1,3-6 * | 1,9 | INV. F02D41/22<br><br>ADD. F02D9/02 |
| X<br><br>A | WO 00/47885 A (THOREB AB [SE]; BRYNIELSSON THORE [SE]) 17 August 2000 (2000-08-17)<br>* page 4, columns 9-20 *<br>* page 5, lines 4-17 *<br>* page 9, lines 7-14 *<br>* page 11, lines 5-37 *<br>* page 12, line 29 - page 13, line 4 *<br>* page 13, lines 20-29 *<br>* figures 2,4,6 * | 1,2,5,9<br><br>4,6-8 | |

| TECHNICAL FIELDS SEARCHED (IPC) |
|---|
| F02D |

The present search report has been drawn up for all claims

| Place of search | Date of completion of the search | Examiner |
|---|---|---|
| Munich | 10 September 2007 | Mallo López, Manuel |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT ON EUROPEAN PATENT APPLICATION NO. EP 07 01 3221

This annex lists the patent family members relating to the patent documents cited in the above-mentioned European search report.
The members are as contained in the European Patent Office EDP file on
The European Patent Office is in no way liable for these particulars which are merely given for the purpose of information.

10-09-2007

| Patent document cited in search report | Publication date | Patent family member(s) | Publication date |
|---|---|---|---|
| JP 2006057588 A | 02-03-2006 | NONE | |
| WO 0047885 A | 17-08-2000 | AT 266806 T | 15-05-2004 |
| | | AU 748869 B2 | 13-06-2002 |
| | | AU 2586000 A | 29-08-2000 |
| | | BR 0007829 A | 15-01-2002 |
| | | DE 60010655 D1 | 17-06-2004 |
| | | DE 60010655 T2 | 14-07-2005 |
| | | EP 1147301 A1 | 24-10-2001 |
| | | SE 515162 C2 | 18-06-2001 |
| | | SE 9900268 A | 29-07-2000 |
| | | US 6556900 B1 | 29-04-2003 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 9209809 A
- JP 2002276440 A